# FASCICULE DE BREVET EUROPEEN

(11) **EP 2 839 147 B1**
(45) Date de publication et mention de la délivrance du brevet: **21.09.2016**
(21) Numéro de dépôt: 13717265.6
(22) Date de dépôt: 16.04.2013
(51) Int. Cl.: F03D 1/06, B64C 3/18, B64C 3/20, B64C 3/26, B64C 27/473, F03D 1/00

(54) **ASSEMBLAGE DE TRONCONS DE PIÈCES STRUCTURALES**
ANORDNUNG VON ABSCHNITTEN VON BAUTEILEN
ASSEMBLY OF SECTIONS OF STRUCTURAL PARTS

(30) Priorité: 20.04.2012 FR 1201173
(43) Date de publication de la demande: 25.02.2015
(73) Titulaire: Airbus Defence and Space SAS, 78130 Les Mureaux (FR)
(72) Inventeur: HUMBLOT, Antoine, 33160 Saint Medard en Jalles (FR); NAUD, François, F-33000 Bordeaux (FR)
(74) Mandataire: Ipside
(86) Numéro de dépôt international: PCT/EP2013/057916
(87) Numéro de publication internationale: WO 2013/156482

(56) Documents cités:
- WO-A1-2011/006800
- WO-A2-2012/004571
- ES-A1- 2 343 712
- US-A1- 2009 136 355
- US-A1- 2009 162 206
- US-A1- 2009 226 320
- US-A1- 2011 052 403
- US-A1- 2011 142 667
- US-A1- 2011 142 679
- US-A1- 2012 045 606

## Description

La présente invention concerne l'assemblage de tronçons de pièces structurales et notamment une technique d'assemblage de pièces structurales pour des ailes ou pales d'éoliennes en tronçons. Elle s'applique en particulier à des pièces structurales en matériaux composites et notamment de celles comportant des assemblages collés ou solidarisés par polymérisation.

On conçoit aujourd'hui des éoliennes dont les pales atteignent plusieurs dizaines de mètres. De telles pales posent évidemment de nombreux problèmes techniques, mais également logistiques. Le transport terrestre ou maritime de ces structures peut s'avérer problématique, surtout si l'accessibilité de la zone d'implantation est difficile.

Du point de vue technique, l'utilisation de matériaux composites permet d'alléger les pales et donc de diminuer les efforts sur la structure entière de l'éolienne.

Du point de vue logistique, l'assemblage de tronçons de pales sur site permet de réduire la criticité et le coût des phases de transport.

Il est ainsi avantageux de pouvoir transporter ces pales sous forme de tronçons que l'on assemblera ensuite sur le site de production.

Pour réaliser ces tronçons et les assembler il se pose donc le problème de l'assemblage de pièces en matériaux composites, dans une perspective de solution mécaniquement optimisée en termes de masse, de coût, et de simplicité.

Différents types de liaisons et méthodes d'assemblage existent pour des pièces telles que des tronçons de pales d'éoliennes et on citera par exemple les types de liaisons et méthodes des documents au nom de la demanderesse FR 2 937 687 A1, FR 2 937 689 A1 qui proposent des solutions pour lesquelles les tronçons peuvent être repliés et FR 2 948 154 A1 qui propose une solution avec fixations en bout au moyen de ferrures prolongeant un caisson central des tronçons de pale. Le document WO2012/004571 montre par ailleurs une pale selon le préambule de la revendication 1.

Globalement ces liaisons et méthodes d'assemblage nécessitent de nombreuses pièces et reposent notamment sur l'utilisation de moyens d'interface s'insérant entre les parties composites des tronçons.

Il est par ailleurs connu de réaliser des jonctions de pièces par éclissage.

La présente invention a pour but de proposer un type de liaison et un procédé de fabrication adapté à la réalisation d'ailes ou de pales en plusieurs tronçons permettant un assemblage simplifiés des tronçons lors de la construction d'un aéronef ou de la construction d'éoliennes. La présente invention permet en outre de réaliser une continuité des tronçons mis bout à bout au niveau de leur liaison et d'éviter l'ajout de capots au niveau de cette liaison.

Selon un principe de la présente invention, les tronçons sont assemblés au moyens d'éclisses et comme il sera vu ci après, la liaison et le procédé de l'invention restent utilisables sur site de montage, en particulier dans le cas de pales d'éoliennes.

La présente invention prévoit pour ce faire une aile ou pale en au moins deux tronçons en vis-à-vis, lesdits tronçons comportant chacun une structure porteuse longitudinale pourvue de deux semelles et d'au moins un longeron reliant les deux semelles, pour laquelle une liaison entre les tronçons comprend au moins des premières éclisses reliant l'extrémité des semelles desdits tronçons en vis-à-vis, des fentes étant ménagées entre ledit au moins un longeron et les semelles par réduction de la hauteur dudit longeron dans une partie de réception des premières éclisses, les premières éclisses reliant les semelles étant reçues dans lesdites fentes.

Avantageusement l'extrémité des semelles desdits tronçons recevant l'éclisse comportent une surépaisseur de renfort.

Préférablement, l'extrémité des semelles desdits tronçons recevant l'éclisse forme une terminaison élargie.

Les semelles sont avantageusement réalisées par des plis axiaux de matériaux composites et sont renforcées au niveau des terminaisons par des plis biaxiaux afin d'obtenir un empilement adapté à la reprise des efforts des fixations.

La liaison comprend avantageusement en outre au moins une seconde éclisse de liaison des longerons de deux tronçons consécutifs.

Selon un mode de réalisation particulier, la structure porteuse des tronçons est une poutre en H comprenant deux semelles et un longeron reliant les deux semelles.

Plus particulièrement l'extrémité de la structure porteuse reçoit au moins une première éclisse par semelle et au moins une seconde éclisse sur le longeron.

Selon un mode de réalisation particulier, l'aile ou pale comporte des peaux intrado et extrado solidarisées avec les semelles.

L'aile ou pale comporte avantageusement des profils internes prolongeant les semelles dans une direction transversale par rapport à la structure porteuse longitudinale, les peaux intrado et extrado et les profils internes formant une structure sandwich de la pale.

Selon un mode de réalisation particulier, les peaux intrado et extrado comportent des trappes d'accès aux éclisses.

Selon un mode de réalisation particulier, la fixation des éclisses se fait par l'intermédiaire de liaisons boulonnées.

Les ensembles peau-semelle-profils internes sont notamment des ensembles composites solidarisés par polymérisation, ces ensembles étant reliés par les premières éclisses.

L'invention propose en outre un procédé de fabrication d'une aile ou pale comportant au moins deux tronçons, qui, selon un premier mode de réalisation, comprend une étape de drapage d'une première peau de la longueur de l'aile sur une forme, une étape de pose d'une première semelle de la longueur de l'aile sur la première peau, une étape d'accostage de profils internes sur la première peau de part et d'autre de la première semelle, une étape d'imprégnation de résine et de polymérisation de l'ensemble puis une étape de pose d'une première première éclisse sur la semelle à cheval sur une zone de coupe de l'aile en deux tronçons, l'éclisse étant rendue solidaire de la semelle d'un premier côté de la zone de coupe.

Préférablement la première première éclisse est rendue solidaire de la semelle par boulonnage sur la semelle du premier côté de la zone de coupe.

En complément ou en alternative, la première première éclisse est rendue solidaire de la semelle par collage sur la semelle du premier côté de la zone de coupe.

Préférablement, l'éclisse est fixée provisoirement à la semelle sur un second côté de la zone de coupe.

La structure porteuse longitudinale de chaque tronçon comprenant une seconde semelle et une seconde peau, le procédé est avantageusement répété pour la seconde semelle et la seconde peau.

Selon un second mode de réalisation, le procédé comprend une étape de drapage d'une première peau de la longueur de l'aile sur une forme, une étape de pose d'une première semelle de la longueur de l'aile sur la première peau, une étape d'accostage de profils internes sur la première peau de part et d'autre de la première semelle, une étape de pose d'une première première éclisse sur la semelle à cheval sur une zone de coupe de l'aile en deux tronçons, l'éclisse étant pourvue de moyens s'opposant au collage de l'éclisse sur la semelle d'un second côté de la zone de coupe puis une étape d'imprégnation de résine et de polymérisation de l'ensemble.

Selon ce second mode de réalisation, la première première éclisse est préférablement boulonnée sur la semelle du premier côté de la zone de coupe.

Toujours selon ce second mode de réalisation, l'éclisse est avantageusement fixée provisoirement à la semelle sur le second côté de la zone de coupe.

La structure porteuse longitudinale de chaque tronçon comprenant une seconde semelle et une seconde peau, le second mode de réalisation du procédé est répété pour la seconde semelle et la seconde peau.

Les tronçons comportant des longerons qui forment avec les semelles une poutre en H, Le premier mode ou le second mode de réalisation du procédé sont avantageusement poursuivis par une étape d'éclissage des longerons des tronçons au moyen d'au moins une seconde éclisse, une étape de collage des longerons éclissés sur la première semelle éclissée et une étape de collage de la seconde semelle sur le longeron côté opposé à la première semelle par fermeture à l'aveugle de l'aile ou pale pour réaliser le collage de la seconde peau sur la première peau équipée du longeron et le collage du longeron sur la deuxième semelle.

Le procédé comporte avantageusement un démoulage de l'aile, une découpe des peaux et des semelles au niveau de la zone de coupe formant jonction des tronçons et un démontage des premières éclisses du côté du second tronçon.

Les premières éclisses étant collées sur un tronçon, par exemple coté pied de pale, une fois la découpe effectuée, on désassemble préférablement les tronçons par démontage des premières éclisses côté tronçon bout de pale, les premières éclisses collées restant positionnées dans le tronçon pied de pale et par démontages des secondes éclisses des longerons.

Avantageusement, on assemble les tronçons par insertion des éclisses du tronçon pied de pale dans le tronçon bout de pale par boulonnage des éclisses sur la semelle du tronçon bout de pale et par éclissage des longerons.

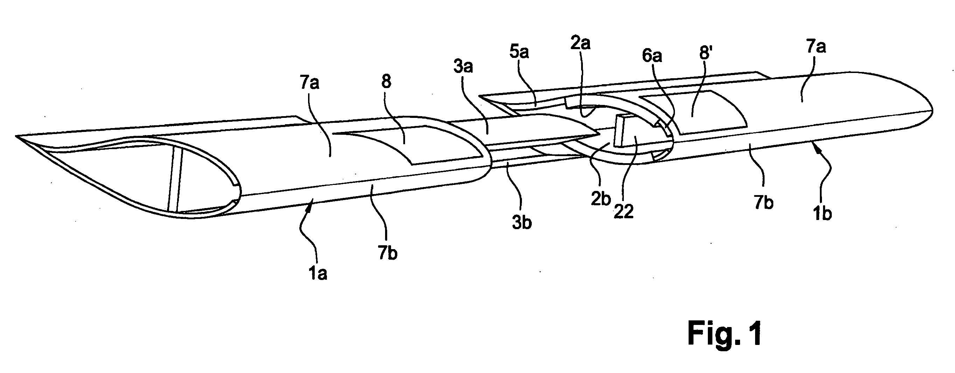

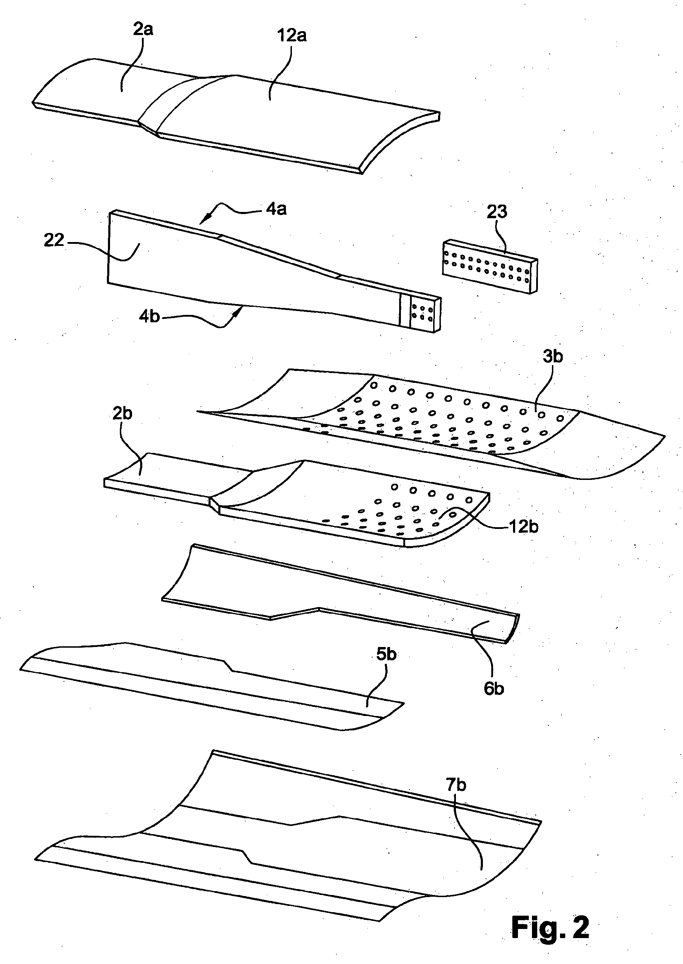

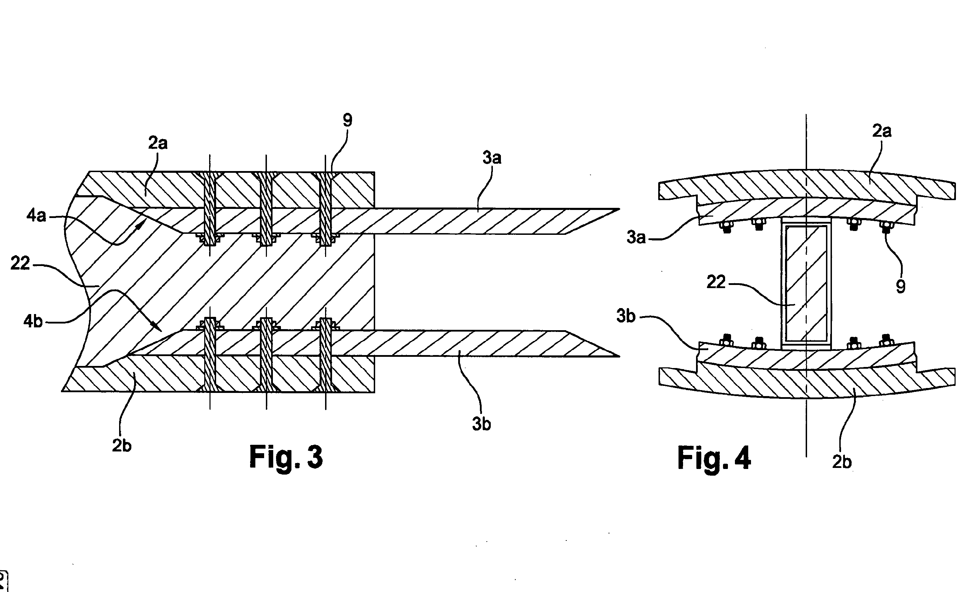

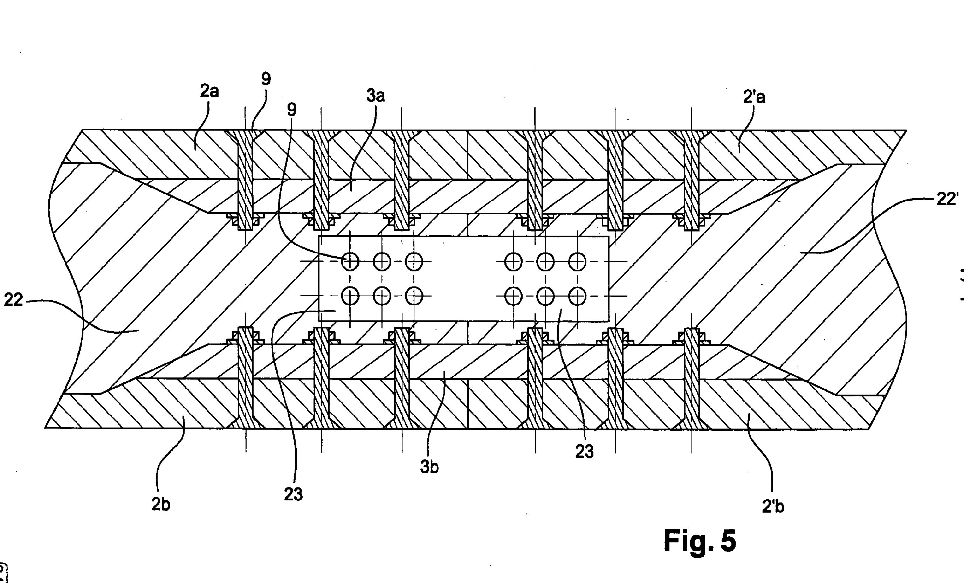

D'autres caractéristiques et avantages de l'invention seront apparents à la lecture de la description qui suit d'un exemple non limitatif de l'invention en référence aux dessins qui représentent:
en figure 1: une vue en perspective de deux tronçons d'aile ou de pale selon un mode de réalisation particulier de l'invention en cours d'assemblage;
en figure 2: une vue en éclaté d'une partie de jonction d'un tronçon de la figure 1 ;
en figure 3: une vue schématique de côté d'une terminaison d'un exemple de structure porteuse d'aile ou de pale équipée de premières éclisses;
en figure 4: la structure de la figure 3 en vue de face;
en figure 5: une vue de côté d'une jonction terminée entre deux structures porteuses selon la figure 3.

La figure 1 représente une aile ou pale en au moins deux tronçons 1a, 1 b en vis-à-vis.

Selon l'exemple les tronçons sont assemblés bout à bout.

Les tronçons comportent chacun une peau d'extrado 7a et une peau d'intrado 7b et une structure porteuse longitudinale 2a, 2b, 22 pourvue de semelles 2a, 2b.

La liaison entre les tronçons est réalisée au moyen de premières éclisses 3a, 3b reliant l'extrémité des semelles desdits tronçons en vis-à-vis.

La figure 2 est une vue en éclaté de l'extrémité de jonction d'un des tronçons une fois la pale coupée en tronçons.

La structure porteuse est ici réalisée par deux semelles 2a, 2b et un longeron 22 perpendiculaire aux semelles qui réalisent une semelle d'extrado et une semelle d'intrado.

L'extrémité 12a, 12b des semelles sur laquelle se fixent les éclisses comporte une surépaisseur de renfort, seule l'éclisse 3b côté intrado est représentée en figure 2 pour simplifier le schéma, l'éclisse 3a côté extrado se trouvant en miroir de l'éclisse 3b par rapport au longeron.

L'extrémité des semelles recevant les premières éclisses forme une terminaison 12a, 12b élargie de sorte qu'une large zone de fixation soit présente au niveau des jonctions où les éclisses de semelle assurent la continuité des deux tronçons et reprennent les efforts des fixations.

Au niveau du longeron 22 est représentée une seconde éclisse 23 de liaison des longerons de deux tronçons 1 a, 1 b.

Sur la figure 2 sont aussi représentés des profils internes 5b, 6b, qui prolongent la semelle 2b dans une direction transversale par rapport à la structure porteuse longitudinale.

La peau intrado 7b est solidarisée avec la semelle 2b et les profils internes 5b, 6b qui entourent la semelle 2b tout en épousant la forme élargie de la terminaison 12b.

La peau est réalisée en partant d'un tissu qui s'étend au delà de la semelle sur tout le profil externe de la pale, et qui va constituer la peau externe 7b de la pale. Sur la face interne de ce tissu, on vient ensuite constituer le profil interne 5a, 5b, 6a, 6b, qui est réalisé par exemple avec une mousse, un matériau nid d'abeille, balsa ou autre matériau de remplissage léger adapté.

La peau et le profil interne réalisent un matériau sandwich léger et peu onéreux. Sur le profil interne est éventuellement déposé un second tissu de réalisation d'une peau interne terminant le sandwich.

Le sandwich comprenant les peaux et les profils internes ainsi que la peau et les semelles vont assurer la géométrie de la pale.

Dans le cas d'une mousse, on choisit une mousse adaptée au procédé d'infiltration de résine, et en particulier une mousse à porosités fermées sauf en surface.

La mousse comporte des canaux permettant à la résine de passer d'une peau à l'autre du sandwich lors de l'infiltration de résine.

La même configuration semelle/profils internes/peau se retrouve au niveau de l'extrado.

Dans le cas d'ailes ou de pales en matériaux composites, les semelles sont notamment réalisées par des plis axiaux de matériaux composites et sont renforcées au niveau des terminaisons par des plis biaxiaux afin d'obtenir un empilement adapté à la reprise des efforts des fixations par exemple matage, trusquinage ou autre.

Les plis axiaux sont réalisés avec des tissus UD (Uni Directionnels), orientés selon l'axe de la pale (0 degrés).

Les plis biaxiaux sont des tissus dont les fils sont à +/- 45 degrés. C'est soit un empilement de plusieurs UD, soit des plis déjà munis d'empilements.

Il est possible d'utiliser aussi pour les éclisses et les semelles dans leur zone renforcée 12a des empilements triaxiaux comportant des plis ayant des orientations à + ou - 45 degrés par exemple.

La semelle de la pale est ainsi renforcée pour reprendre les efforts des liaisons boulonnées. L'assemblage semelles et éclisses sera sollicité en traction compression ainsi qu'en matage engendré par les liaisons boulonnées. Les fixations reprennent les efforts de cisaillement ainsi que de flexion due à la forte épaisseur des éléments à assembler.

Il y a lieu de noter que selon la présente invention, les semelles des deux tronçons sont réalisées en une seule pièce et que donc les zones renforcées se trouvent dans une partie centrale de la semelle.

Les figures 3 et 4 représente une structure porteuse des tronçons sous la forme d'une poutre en H comprenant deux semelles 2a, 2b et un longeron 22 reliant les deux semelles.

La structure porteuse reçoit une première éclisse 3a, 3b par semelle les premières éclisses reliant les semelles étant reçues dans des fentes ménagées entre le longeron 22 et les semelles 2a, 2b par réduction de la hauteur du longeron dans la partie 4a, 4b de réception des premières éclisses 3a, 3b.

La fixation des éclisses se fait par l'intermédiaire de liaisons boulonnées 9.

La surépaisseur de renfort des semelles et les premières éclissent comblent les fentes réalisées par l'amincissement de l'extrémité du longeron 22.

Selon la figure 4 les premières éclisses 3a, 3b sont conformées pour épouser la courbure des semelles dans une direction transversale.

Le tronçon ainsi équipé comporte une terminaison adaptée à venir s'insérer entre les semelles et le longeron d'un second tronçon lors de l'assemblage d'un premier et d'un second tronçon.

La figure 5 représente la jonction entre les tronçons terminée.

La jonction comporte une seconde éclisse 23 boulonnée sur les longerons 22, 22' des deux tronçons raccordés. Une ou deux éclisses d'un côté ou des deux côtés des longerons peuvent être prévues.

Les éclisses de longerons assurent la continuité entre les longerons de chacun des tronçons de pale. Les longerons reprennent les efforts tranchants sollicitant l'aile ou la pale et les secondes éclisses reprennent également ces efforts au niveau de la jonction.

La hauteur du longeron est réduite au niveau de la liaison afin de respecter l'encombrement restreint dû à la présence des surépaisseurs de semelles et des éclisses.

De retour à la figure 1, les peaux intrado et extrado comportent des trappes 8, 8' d'accès aux éclisses permettant de les boulonner et éventuellement de les retirer pour démonter les tronçons. Ces trappes sont nécessaires pour pouvoir effectuer l'assemblage des tronçons sur site, et elle doivent être assez grandes pour qu'on ait accès aux éclisses 23 et à leurs moyens de fixation sur les semelles.

L'assemblage des premières éclisses aux tronçons de pale se fait par l'intermédiaire de liaisons boulonnées 9 dont les boulons sont serrés au travers de trappes d'accès. La continuité du longeron se fait également par l'intermédiaire d'une seconde éclisse boulonnée 9.

Les liaisons boulonnées permettront de transférer une grande partie des efforts de la semelle vers l'éclisse afin d'assurer la continuité de chacun des tronçons, la liaison boulonnée de l'éclisse de longeron permettant de transférer une partie de l'effort tranchant entre l'éclisse et le longeron.

Les matériaux constituant les éclisses, les semelles, le longeron, les peaux et les profils internes sont des matériaux composites réalisés au moyen de tissus de fibres et de résines.

Les matériaux composites utilisés sont par exemple des tissus de verre et des résines époxy, d'autres matériaux composites techniques pouvant être utilisés.

Les mousses sont de préférence des mousses PVC

Dans ce cadre d'aile composite, le procédé de l'invention permet avantageusement de fabriquer l'aile ou la pale de l'invention entière dans un seul gabarit ou moule puis de la découper pour réaliser les tronçons.

L'avantage principal est qu'un dimensionnement précis au niveau des jonctions est obtenu. De ce fait, le montage sur site de l'aile où de la pale est facilité et son profil ne comporte pas de rupture ou de défaut nécessitant par exemple un capotage ou une opération complémentaire.

Un première mode de réalisation du procédé applicable à l'invention comporte les étapes suivantes.
- Fabrication d'une semelle intrados renforcée à la longueur des deux tronçons ;
- fabrication de deux éclisses de semelles ou premières éclisses ;
- fabrication d'une semelle extrados renforcée à la longueur des deux tronçons ;
- fabrication de deux éclisses de longeron ou secondes éclisses;
- drapage de la peau externe intrados dans un demi-moule avec mise en place de la semelle intrados, des profils internes et de la peau interne intrados si nécessaire, puis injection de résine par infiltration sous vide avec un film du côté opposé au moule et polymérisation, le moule ouvert étant un moule chauffant ;
- mise en place de l'éclisse sur la semelle, pose des visseries de fixation définitive sur une première partie latérale l'éclisse, tandis que la seconde partie latérale de l'éclisse reçoit une fixation provisoire, par exemple au moyen de 2 x 6 pions de diamètre 18 mm;

Selon cette opération, l'éclisse comporte sa fixation définitive sur un côté de la semelle qui formera un premier tronçon. L'éclisse est par contre juste maintenue sur un second côté de la semelle qui formera un second tronçon.

Autrement dit, l'éclisse comporte sa fixation définitive d'un premier côté d'une zone de coupe pour réaliser les tronçons, la partie d'éclisse du second côté de la zone de coupe ne recevant qu'une fixation provisoire.

Il est dans le cadre de l'invention possible en première variante de coller l'éclisse sur la semelle côté fixation définitive.

Dans ce cas on pose éventuellement un film s'opposant au collage de l'éclisse côté fixation provisoire.

Enfin, on peut aussi envisager en seconde variante de fixer l'éclisse sur la semelle avec les fixations définitives des deux côtés de l'éclisse.

Dans ce cas toutefois on veillera à ne pas trop serrer l'éclisse du côté qui devra être démonté après séparation des tronçons et à éviter tout collage de l'éclisse sur la semelle au moins côté destiné à être démonté.

Pour le côté extrado il est procédé de la même façon que pour l'intrados.

Ensuite il est procédé à une fermeture à l'aveugle de l'aile ou pale pour réaliser le collage de l'extrados sur l'intrado équipé du longeron préalablement découpé, le collage du longeron sur la deuxième semelle et le collage des bords d'attaque et de fuite de l'aile ou pale entre eux.

Pour ces étapes il peut bien entendu être procédé à l'inverse en intervertissant les peaux intrados et extrados.

Ensuite le procédé se poursuit par le démoulage de l'ensemble.

Une fois la pale démoulée les opérations de finition, perçage du pied de pale, ébavurage du bord d'attaque et du bord de fuite sont réalisées, puis la pale est peinte et équilibrée.

Les peaux et les semelles de la pale sont alors découpée au niveau de l'endroit qui formera la jonction des tronçons.

La pale est découpée une fois assemblée. Seul le longeron est découpé avant fermeture des profils.

La semelle est découpée en même temps que les peaux pour réaliser les tronçons et la profondeur de découpe est maitrisée de manière a ne pas attaquer les éclisses.

Des trappes d'accès sont découpées dans les peaux, et les éclisses sont démontées du côté du tronçon sur lequel elles ne sont pas collées.

L'ensemble des perçages définitifs sont réalisés de sorte que les tronçons puissent être stockés et transportés séparés puis dé nouveau assemblés sur le site de construction de l'éolienne et de production d'électricité.

Ainsi un des tronçons comporte les premières éclisses boulonnées alors que l'autre des tronçons en est démuni et comporte les perçage nécessaires à recevoir et à boulonner ultérieurement les éclisses.

On notera que pour éviter un collage des éclisses sur la partie de la semelle où les éclisses doivent être démontables, ces dernières sont recouvertes d'un film ou tissu de séparation par exemple un film de démoulage à base de PTFE.

Les éclisses restent ainsi démontables sur la partie de semelle destinée à former la semelle de l'un des tronçons et sont fixées définitivement sur la partie de semelle de l'autre tronçon.

Les tronçons fabriqués ensemble dans un même moule et sous forme de l'aile ou de la pale complète sont appariés et s'assemblent parfaitement.

Les éclisses étant collées et/ou définitivement boulonnées sur un tronçon, par exemple coté pieds de pale on peu une fois la découpe effectuée retirer le tronçon bout de pale. Les éclisses collées et/ou définitivement boulonnées sur le tronçon pied de pale restent positionnées dans le tronçon pieds de pale.

Par exemple, la figure 3 représente l'extrémité du tronçon sur lequel l'éclisse est fixée par collage et boulonnage lors de la fabrication de l'aile ou de la pale.

Les tronçons peuvent être stockés et transportés démontés puis assemblés sur le site d'assemblage de l'aéronef ou le site de construction de l'éolienne.

Pour le montage de l'aile ou de la pale entière il suffit alors d'approcher les deux tronçons jusqu'à insertion des parties d'éclisses dans la structure porteuse du second tronçon puis de boulonner les éclisses sur la structure porteuse du second tronçon.

Selon un second mode de réalisation du procédé de fabrication des pales, les étapes suivantes sont réalisées.
- Fabrication d'une semelle intrados renforcée à la longueur des deux tronçons ;
- fabrication de deux éclisses de semelles ou premières éclisses ;
- fabrication d'une semelle extrados renforcée à la longueur des deux tronçons ;
- fabrication de deux éclisses de longeron ou secondes éclisses ;
- drapage de la peau externe intrados dans un demi-moule avec mise en place de la semelle intrados, des profils internes et de la peau interne intrados si nécessaire.

A ce stade la variante consiste à poser la première éclisse sur la semelle avant polymérisation, un côté de l'éclisse étant protégé contre le collage.

L'injection de résine par infiltration sous vide avec un film du côté opposé au moule et polymérisation est ensuite réalisée dans le moule ouvert chauffant ;

Une fois l'intrados de la pale polymérisé il est possible de réaliser les fixations définitives de l'éclisse côté collé sur la semelle et de mettre des fixations provisoires côté non collé.

Commue pour le premier mode de réalisation, le procédé est réalisé de manière identique pour l'extrados de la pale puis les deux profils sont collés ensemble avec le longeron puis les tronçons sont découpés.

Les pièces constituant les pales ou ailes de l'invention ont été dimensionnées mécaniquement en fonction des efforts qu'elles doivent subir et notamment efforts de traction, de compression, de cisaillement etc... mais également à la liaison entre tronçons au niveau des fixations par vis en fonction des efforts de trusquinage et matage.

Selon un exemple particulier de réalisation, les semelles courantes sont réalisées en composite unidirectionnel, les peaux et les longerons en biaxial +/- 45 degrés, les semelles de renforcement et les éclisses en triaxial 0,+/- 45 degrés.

Il est à noter que les ensembles peau-semelle-profils internes sont des ensembles composites solidarisés par polymérisation, ces ensembles étant reliés par les premières éclisses.

L'invention ne se limite pas à l'exemple représenté et peut notamment s'appliquer à une aile ou une pale comportant plus de deux tronçons.

## Revendications

1. Aile ou pale en au moins deux tronçons (1a, 1b) en vis-à-vis, lesdits tronçons comportant chacun une structure porteuse longitudinale (2a, 2b, 22) pourvue de deux semelles (2a, 2b) et d'au moins un longeron (22) reliant les deux semelles, pour laquelle une liaison entre les tronçons comprend au moins des premières éclisses (3a, 3b) reliant l'extrémité des semelles desdits tronçons en vis-à-vis, **caractérisée en ce que** des fentes sont ménagées entre ledit au moins un longeron (22) et les semelles (2a, 2b) par réduction de la hauteur dudit longeron dans une partie (4a, 4b) de réception des premières éclisses (3a, 3b), les premières éclisses reliant les semelles étant reçues dans lesdites fentes.

2. Aile ou pale selon la revendication 1 pour laquelle l'extrémité des semelles desdits tronçons recevant l'éclisse comportent une surépaisseur de renfort.

3. Aile ou pale selon la revendication 1 ou 2 pour laquelle l'extrémité des semelles desdits tronçons recevant l'éclisse forme une terminaison (12a, 12b) élargie.

4. Aile ou pale selon la revendication 3 pour laquelle les semelles sont réalisées par des plis axiaux de matériaux composites et sont renforcées au niveau des terminaisons par des plis biaxiaux afin d'obtenir un empilement adapté à la reprise des efforts des fixations.

5. Aile ou pale selon l'une quelconque des revendications précédentes pour laquelle la liaison comprend en outre au moins une seconde éclisse (23) de liaison des longerons (22, 22') de deux tronçons (1a, 1b) consécutifs.

6. Aile ou pale selon la revendication 5 pour laquelle la structure porteuse des tronçons est une poutre en H comprenant deux semelles (2a, 2b) et un longeron (22) reliant les deux semelles.

7. Aile ou pale selon la revendication 6 pour laquelle l'extrémité de la structure porteuse reçoit au moins une première éclisse (3a, 3b) par semelle et au moins une seconde éclisse (23) sur le longeron (22).

8. Aile ou pale selon l'une quelconque des revendications précédentes **caractérisée en ce qu'**elle comporte des peaux intrado et extrado (7a, 7b) solidarisées avec les semelles.

9. Aile ou pale selon la revendication 8 **caractérisée en ce qu'**elle comporte en outre des profils internes (5a, 5b, 6a, 6b) prolongeant les semelles (2a, 2b) dans une direction transversale par rapport à la structure porteuse longitudinale, les peaux intrado et extrado (7a, 7b) et les profils internes (5a, 5b, 6a, 6b) formant une structure sandwich de la pale.

10. Aile ou pale selon la revendications 8 ou 9 pour laquelle les peaux intrado et extrado comportent des trappes (8, 8') d'accès aux éclisses.

11. Aile ou pale selon l'une quelconque des revendications précédentes pour laquelle la fixation des éclisses se fait par l'intermédiaire de liaisons boulonnées (9).

12. Aile ou pale selon l'une quelconque des revendications 8 à 10 pour laquelle les ensembles peau-semelle-profils internes sont des ensembles composites solidarisés par polymérisation, ces ensembles étant reliés par les premières éclisses.

13. Procédé de fabrication d'une aile ou pale selon l'une quelconque des revendications précédentes, **caractérisé en ce qu'**il comprend une étape de drapage d'une première peau de la longueur de l'aile sur une forme, une étape de pose d'une première semelle de la longueur de l'aile sur la première peau, une étape d'accostage de profils internes sur la première peau de part et d'autre de la première semelle, une étape d'imprégnation de résine et de polymérisation de l'ensemble puis une étape de pose d'une première première éclisse sur la semelle à cheval sur une zone de coupe de l'aile en deux tronçons, l'éclisse étant rendue solidaire de la semelle d'un premier côté de la zone de coupe.

14. Procédé selon la revendication 13 pour lequel la première première éclisse est rendue solidaire de la semelle par boulonnage sur la semelle du premier côté de la zone de coupe.

15. Procédé selon la revendication 13 ou 14 pour lequel la première première éclisse est rendue solidaire de la semelle par collage sur la semelle du premier côté de la zone de coupe.

16. Procédé selon l'une quelconque des revendications 13 à 15 pour lequel l'éclisse est fixée provisoirement à la semelle sur un second côté de la zone de coupe.

17. Procédé selon l'une quelconque des revendications 13 à 16 pour lequel la structure porteuse longitudinale de chaque tronçon comprenant une seconde semelle et une seconde peau, le procédé est répété pour la seconde semelle et la seconde peau.

18. Procédé de fabrication d'une aile ou pale selon l'une quelconque des revendications 1 à 12, **caractérisé en ce qu'**il comprend une étape de drapage d'une première peau de la longueur de l'aile sur une forme, une étape de pose d'une première semelle de la longueur de l'aile sur la première peau, une étape d'accostage de profils internes sur la première peau de part et d'autre de la première semelle, une étape de pose d'une première première éclisse sur la semelle à cheval sur une zone de coupe de l'aile en deux tronçons, l'éclisse étant pourvue de moyens s'opposant au collage de l'éclisse sur la semelle d'un second côté de la zone de coupe puis une étape d'imprégnation de résine et de polymérisation de l'ensemble.

19. Procédé selon la revendication 18 pour lequel la première première éclisse est boulonnée sur la semelle du premier côté de la zone de coupe.

20. Procédé selon l'une quelconque des revendications 18 ou 19 pour lequel l'éclisse est fixée provisoirement à la semelle sur le second côté de la zone de coupe.

21. Procédé selon l'une quelconque des revendications 18 à 20 pour lequel la structure porteuse longitudinale de chaque tronçon comprenant une seconde semelle et une seconde peau, le procédé est répété pour la seconde semelle et la seconde peau.

22. Procédé selon la revendication 17 ou 21 pour lequel, les tronçons comportant des longerons qui forment avec les semelles une poutre en H, le procédé comporte une étape d'éclissage des longerons des tronçons au moyen d'au moins une seconde éclisse, une étape de collage des longerons éclissés sur la première semelle éclissée et une étape de collage de la seconde semelle sur le longeron côté opposé à la première semelle par fermeture à l'aveugle de l'aile ou pale pour réaliser le collage de la seconde peau sur la première peau équipée du longeron et le collage du longeron sur la deuxième semelle.

23. Procédé selon la revendication 22 **caractérisé en ce qu'**il comporte un démoulage de l'aile, une découpe des peaux et des semelles au niveau de la zone de coupe formant jonction des tronçons et un démontage des premières éclisses du côté du second tronçon.

24. Procédé selon la revendication 23 pour lequel les premières éclisses étant collées sur un tronçon, par exemple coté pied de pale, une fois la découpe effectuée, on désassemble les tronçons par démontage des premières éclisses côté tronçon bout de pale, les premières éclisses collées restant positionnées dans le tronçon pied de pale et par démontages des secondes éclisses des longerons.

25. Procédé selon la revendication 24 pour lequel on assemble les tronçons par insertion des éclisses du tronçon pied de pale dans le tronçon bout de pale par boulonnage des éclisses sur la semelle du tronçon bout de pale et par éclissage des longerons.

## Patentansprüche

1. Flügel oder Schaufel aus mindestens zwei gegenüber liegenden Teilstücken (1a, 1b), wobei die Teilstücke jeweils eine longitudinale, mit zwei Flanschen (2a, 2b) versehene Tragstruktur (2a, 2b, 22) und mindestens einen Längsträger (22) aufweist, welcher die beiden Flansche verbindet, bei welcher eine Verbindung zwischen den Teilstücken mindestens erste Schienen (3a, 3b) aufweist, welche das Ende der Flansche der gegenüber liegenden Teilstücke verbinden, **dadurch gekennzeichnet, dass** zwischen dem mindestens einen Längsträger (22) und den Flanschen (2a, 2b) durch Reduzierung der Höhe des Längsträgers in einem Abschnitt (4a, 4b) zur Aufnahme der ersten Schienen (3a, 3b) Spalte eingebracht sind, wobei die die Flansche verbindenden ersten Schienen in den Spalten aufgenommen werden.

2. Flügel oder Schaufel nach Anspruch 1, bei welcher das die Schiene aufnehmende Ende der Flansche der Teilstücke eine Verdickung zur Verstärkung aufweist.

3. Flügel oder Schaufel nach Anspruch 1 oder 2, bei welcher das die Schiene aufnehmende Ende der Flansche der Teilstücke einen erweiterten Abschluss (12a, 12b) bildet.

4. Flügel oder Schaufel nach Anspruch 3, bei welcher die Flansche durch axiale Falten von Verbundwerkstoffen ausgeführt sind und im Bereich der Abschlüsse durch zweiachsige Falten verstärkt sind, um eine Packung zu erhalten, welche an die Aufnahme der Befestigungsbelastungen angepasst ist.

5. Flügel oder Schaufel nach einem der vorhergehenden Ansprüche, bei welcher die Verbindung außerdem mindestens eine zweite Schiene (23) zur Verbindung der Längsträger (22, 22') der beiden aufeinander folgenden Teilstücke (1a, 1b) aufweist.

6. Flügel oder Schaufel nach Anspruch 5, bei welcher die Tragstruktur der Teilstücke ein H-Träger, welcher zwei Flansche (2a, 2b) aufweist, und ein Längsträger (22) ist, welcher die beiden Flansche verbindet.

7. Flügel oder Schaufel nach Anspruch 6, bei welcher das Ende der Tragstruktur mindestens eine erste Schiene (3a, 3b) pro Flansch und mindestens eine zweite Schiene (23) auf dem Längsträger (22) aufnimmt.

8. Flügel oder Schaufel nach einem der vorhergehenden Ansprüche, **dadurch gekennzeichnet, dass** sie eine innere und äußere Haut (7a, 7b) aufweist, welche fest mit den Flanschen verbunden sind.

9. Flügel oder Schaufel nach Anspruch 8, **dadurch gekennzeichnet, dass** sie außerdem Innenprofile (5a, 5b, 6a, 6b) aufweist, welche die Flansche (2a, 2b) in einer in Bezug auf die longitudinale Tragstruktur quer verlaufende Richtung verlängern, wobei die innere und äußere Haut (7a, 7b) und die Innenprofile (5a, 5b, 6a, 6b) eine Sandwichstruktur der Schaufel bilden.

10. Flügel oder Schaufel nach Anspruch 8 oder 9, bei welcher die innere und äußere Haut Zugangsklappen (8, 8') zu den Schienen aufweisen.

11. Flügel oder Schaufel nach einem der vorhergehenden Ansprüche, bei welcher die Befestigung der Schienen mit Hilfe von verschraubten Verbindungen (9) erfolgt. Flügel oder Schaufel nach einem der Ansprüche 8 bis 10, bei welcher die Baugruppen Haut-Flansch-Innenprofile.

12. Verbundbaugruppen sind, welche durch Polymerisation fest verbunden sind, wobei diese Baugruppen durch die ersten Schienen verbunden sind.

13. Verfahren zur Herstellung eines Flügels oder einer Schaufel nach einem der vorhergehenden Ansprüche, **dadurch gekennzeichnet, dass** es einen Schritt zum Drapieren einer ersten Haut mit der Länge des Flügels über einer Form, einen Schritt zum Ablegen eines ersten Flansches mit der Länge des Flügels auf der ersten Haut, einen Schritt zum Verankern von Innenprofilen auf der ersten Haut beiderseits des ersten Flansches, einen Schritt zur Imprägnierung mit Harz und zur Polymerisation der Baugruppe, dann einen Schritt zum Ablegen einer ersten ersten Schiene auf dem Flansch beiderseits eines Schnittbereichs des Flügels in zwei Teilstücke aufweist, wobei die Schiene auf einer Seite des Schnittbereichs fest mit dem Flansch verbunden wird.

14. Verfahren nach Anspruch 13, bei welchem die erste erste Schiene durch Verschraubung fest mit dem Flansch der erste Seite des Schnittbereichs verbunden wird.

15. Verfahren nach Anspruch 13 oder 14, bei welchem die erste erste Schiene durch Klebung fest mit dem Flansch der erste Seite des Schnittbereichs verbunden wird.

16. Verfahren nach einem der Ansprüche 13 bis 15, bei welchem die Schiene vorübergehend an einer zweiten Seite des Schnittbereichs an dem Flansch befestigt wird.

17. Verfahren nach einem der Ansprüche 13 bis 16, bei welchem die longitudinale Tragstruktur jedes Teilstückes einen zweiten Flansch und eine zweite Haut aufweist, wobei das Verfahren für den zweiten Flansch und die zweite Haut wiederholt wird.

18. Verfahren zur Herstellung eines Flügels oder einer Schaufel nach einem der Ansprüche 1 bis 12, **dadurch gekennzeichnet, dass** es einen Schritt zum Drapieren einer ersten Haut mit der Länge des Flügels über einer Form, einen Schritt zum Ablegen eines ersten Flansches mit der Länge des Flügels auf der ersten Haut, einen Schritt zum Verankern von Innenprofilen auf der ersten Haut beiderseits des ersten Flansches, einen Schritt zum Ablegen einer ersten ersten Schiene auf dem Flansch beiderseits eines Schnittbereichs des Flügels in zwei Teilstücke, wobei die Schiene mit sich gegenüber liegenden Mitteln zur Klebung der Schiene auf dem Flansch einer zweiten Seite des Schnittbereichs versehen ist, dann einen Schritt zur Imprägnierung mit Harz und zur Polymerisation der Baugruppe aufweist.

19. Verfahren nach Anspruch 18, bei welchem die erste erste Schiene an dem Flansch der ersten Seite des Schnittbereichs verschraubt wird.

20. Verfahren nach einem der Ansprüche 18 oder 19, bei welchem die Schiene vorübergehend an der zweiten Seite des Schnittbereichs an dem Flansch befestigt wird.

21. Verfahren nach einem der Ansprüche 18 bis 20, bei welchem die longitudinale Tragstruktur jedes Teilstückes einen zweiten Flansch und eine zweite Haut aufweist, wobei das Verfahren für den zweiten Flansch und die zweite Haut wiederholt wird.

22. Verfahren nach Anspruch 17 oder 21, bei welchem die Teilstücke Längsträger aufweisen, welche mit den Flanschen einen H-Träger bilden, wobei das Verfahren einen Schritt zum Schienen der Längsträger der Teilstücke mittels mindestens einer zweiten Schiene, einen Schritt zum Kleben der geschienten Längsträger an dem ersten geschienten Flansch und einen Schritt zum Kleben des zweiten Flansches an dem dem ersten Flansch gegenüber liegenden Längsträger durch Blindverschluss des Flügels oder der Schaufel aufweist, um die Klebung der zweiten Haut auf der mit dem Längsträger ausgerüsteten ersten Haut und die Klebung des Längsträgers an dem zweiten Flansch zu bewerkstelligen.

23. Verfahren nach Anspruch 22, **dadurch gekennzeichnet, dass** es ein Entformen des Flügels, eine Abschneiden der Häute und der Flansche im Bereich des die Verbindung der Teilstücke bildenden Schnittbereichs und eine Demontage der ersten Schiene auf der Seite des zweiten Teilstücks aufweist.

24. Verfahren nach Anspruch 23, bei welchem, nachdem die ersten Schienen an einem Teilstück angeklebt sind, zum Beispiel an der Seite des Schaufelfußes, wenn das Abschneiden erfolgt ist, die Teilstücke durch Demontage der ersten Schienen, die am Teilstück des Schaufelendes gelegen sind, wobei die ersten geklebten Schienen im Teilstück des Schaufelfußes angeordnet verbleiben, und durch Demontagen der zweiten Schienen der Längsträger auseinander genommen werden.

25. Verfahren nach Anspruch 24, bei welchem die Teilstücke durch Einsetzen der Schienen des Teilstücks des Schaufelfußes in das Teilstück des Schaufelendes durch Verschrauben der Schienen an dem Flansch des Teilstücks des Schaufelendes und durch Schienen der Längsträger zusammengesetzt werden.

## Claims

1. Wing or blade in at least two sections (1a, 1b) facing each other, said sections each including a longitudinal bearing structure (2a, 2b, 22) provided with two sole pieces (2a, 2b) and at least one longitudinal member (22) linking the two sole pieces, for which a link between the sections comprises at least first link plates (3a, 3b) linking the end of the sole pieces of said sections facing each other, **characterized in that** slots are arranged between said at least one longitudinal member (22) and the sole pieces (2a, 2b) by reducing the height of said longitudinal member in a part (4a, 4b) receiving the first link plates (3a, 3b), the first link plates linking the sole pieces being received in said slots.

2. Wing or blade according to Claim 1, of which the end of the sole pieces of said sections receiving the link plate include an additional thickness of reinforcing material.

3. Wing or blade according to Claim 1 or 2, of which the end of the sole pieces of said sections receiving the link plate forms a widened termination (12a, 12b).

4. Wing or blade according to Claim 3, of which the sole pieces are made from axial folds of composite materials and are reinforced at the level of the terminations by biaxial folds in order to obtain a stack suitable for absorbing the forces of the fasteners.

5. Wing or blade according to one of the preceding claims, for which the connection further comprises at least one second link plate (23) for connecting the longitudinal members (22, 22') of two consecutive sections (1a, 1b).

6. Wing or blade according to Claim 5, of which the bearing structure for the sections is an H-section beam comprising two sole pieces (2a, 2b) and a longitudinal member (22) linking the two sole pieces.

7. Wing or blade according to Claim 6, of which the end of the bearing structure receives at least a first link plate (3a, 3b) per sole piece and at least a second link plate (23) on the longitudinal member (22).

8. Wing or blade according to one of the preceding claims, **characterized in that** it includes intrados and extrados skins (7a, 7b) that are secured to the sole pieces.

9. Wing or blade according to Claim 8, **characterized in that** it further includes internal profiles (5a, 5b, 6a, 6b) extending the sole pieces (2a, 2b) in a transverse direction in relation to the longitudinal bearing structure, the intrados and extrados skins (7a, 7b) and the internal profiles (5a, 5b, 6a, 6b) forming a sandwich structure of the blade.

10. Wing or blade according to Claims 8 or 9, of which the intrados and extrados skins include access doors (8, 8') to the link plates.

11. Wing or blade according to one of the preceding claims, of which the fastening of the link plates is effected by means of bolted connections (9).

12. Wing or blade according to one of Claims 8 to 10, of which the skin/sole piece/internal profile assemblies are composite assemblies secured by polymerization, these assemblies being connected by the first link plates.

13. Method of producing a wing or blade according to one of the preceding claims, **characterized in that** it comprises a step of laying up a first skin having the length of the wing on a form, a step of placing a first sole piece having the length of the wing on the first skin, a step of mating internal profiles on the first skin to either side of the first sole piece, a step of impregnation with resin and polymerization of the assembly followed by a step of placing a first first link plate on the sole piece which straddles a cutting zone of the wing in two sections, the link plate being secured to the sole piece on a first side of the cutting zone.

14. Method according to Claim 13, for which the first first link plate is secured to the sole piece by bolting on the sole piece on the first side of the cutting zone.

15. Method according to Claim 13 or 14, for which the first first link plate is secured to the sole piece by gluing on the sole piece on the first side of the cutting zone.

16. Method according to one of Claims 13 to 15, for which the link plate is fixed temporarily to the sole piece on a second side of the cutting zone.

17. Method according to one of Claims 13 to 16, for which, the longitudinal bearing structure of each section comprising a second sole piece and a second skin, the method is repeated for the second sole piece and the second skin.

18. Method of producing a wing or blade according to one of Claims 1 to 12, **characterized in that** it comprises a step of laying up a first skin having the length of the wing on a form, a step of placing a first sole piece having the length of the wing on the first skin, a step of mating internal profiles on the first skin to either side of the first sole piece, a step of placing a first first link plate on the sole piece which straddles a cutting zone of the wing in two sections, the link plate being provided with means preventing the gluing of the link plate on the sole piece on a second side of the cutting zone followed by a step of impregnation with resin and polymerization of the assembly.

19. Method according to Claim 18, for which the first first link plate is bolted on the sole piece on the first side of the cutting zone.

20. Method according to one of Claims 18 and 19, for which the link plate is fixed temporarily to the sole piece on the second side of the cutting zone.

21. Method according to one of Claims 18 to 20, for which, the longitudinal bearing structure of each section comprising a second sole piece and a second skin, the method is repeated for the second sole piece and the second skin.

22. Method according to Claim 17 or 21, for which, the sections including longitudinal members which, together with the sole pieces, form an H-section beam, the method includes a step of jointing longitudinal members of the sections by means of at least one second link plate, a step of gluing longitudinal members that are jointed on the first jointed sole piece and a step of gluing the second sole piece on the longitudinal member on the side opposite the first sole piece by the blind closure of the wing or blade in order to perform the gluing of the second skin on the first skin that is equipped with the longitudinal member and gluing of the longitudinal member on the second sole piece.

23. Method according to Claim 22, **characterized in that** it includes releasing the wing, cutting the skins and the sole pieces at the level of the cutting zone forming a junction of the sections and dismantling the first link plates on the side of the second section.

24. Method according to Claim 23, for which, the first link plates being glued on a section, for example on the blade foot side, once cutting has taken place, the sections are disassembled by dismantling the first link plates on the blade tip section side, the glued first link plates remaining in position in the blade foot section, and by dismantlings of the second link plates of the longitudinal members.

25. Method according to Claim 24, for which the sections are assembled by insertion of the link plates of the blade foot section into the blade tip section by bolting the link plates on the sole piece of the blade tip section and by jointing the longitudinal members.
